# EUROPEAN PATENT SPECIFICATION

(11) **EP 0 350 667 B1**
(45) Date of publication and mention of the grant of the patent: **31.03.1993**
(21) Application number: 89111178.3
(22) Date of filing: 20.06.1989
(51) Int. Cl.: A23L 1/222, A23L 1/236, A23G 3/30, A61K 7/26

(54) **Composition containing reinforcer for taste-modifier**
Mischung enthaltend Verstärkungsmittel für ein Geschmacksveränderungsmittel
Composition contenant un agent renforçant un modificateur de goût

(30) Priority: 21.06.1988 JP 153143/88; 02.11.1988 JP 277717/88; 17.11.1988 JP 290832/88
(43) Date of publication of application: 17.01.1990
(73) Proprietor: Kurihara, Yoshie, Tokyo 158 (JP); ASAHI DENKA KOGYO KABUSHIKI KAISHA, Arakawa-ku Tokyo 116 (JP)
(72) Inventor: Kurihara, Yoshie, Tokyo 125 (JP); Kohno, Hiroshige, Arakawa-ku Tokyo 116 (JP); Kato, Masaaki, Arakawa-ku Tokyo 116 (JP); Ikeda, Kenji, Arakawa-ku Tokyo 116 (JP); Miyake, Masako, Arakawa-ku Tokyo 116 (JP)
(74) Representative: Grünecker, Kinkeldey, Stockmair & Schwanhäusser Anwaltssozietät

(56) References cited:
- EP-A- 0 003 911
- FR-A- 2 089 624
- FR-A- 2 315 864
- GB-A- 1 506 052
- GB-A- 2 185 674
- COMMONWEALTH AGRICULTURAL BUREAU, abstract 0206272, 7C010-01239, 0C054-06355m 7W010-01505 Lim-Ho. Chee Len: "Tissue culture of Curculigo latifolia dry. ex W.T.Ait (Hypoxidaceae)"
- CHEMICAL ABSTRACTS, vol. 107, 1987, page 455, abstract 194889t, Columbus, Ohio, US J. XU et al.: "Chemical constituents of Xianmao (Curculigo orchioides) I. Isolation and characterization of curculigine A"
- G. PENSO:"Index Plantarum Medicinalium Totius Mundi Eorumque Synomymorum", 1984, O.E.M.F., Milano. IT, Page 294 "Curculigo"

## Description

This invention relates to a reinforcer for a taste-modifier. More particularly, it relates to a reinforcer for a taste-modifier comprising fresh Curculigo latifolia fruits, dried fruits thereof or a curculin-containing material obtained therefrom, which reinforces the taste-modification effect of said taste-modifier by lowering the concentration of divalent metal ions in the mouth.

### (Description of the Prior Art)

Known taste-modifiers, which affect the receptor membranes on the tongue in such a manner as to modify the taste of a food, include those which remove the sweetness of a sweet food in the mouth, for example, gymnemic acid contained in Gymnema sylvestre leaves and ziziphine contained in Ziziphus jujuba leaves; and those which convert the sourness of a sour food into sweetness in the mouth, for example, miraculin contained in Synsepulm dulcificum fruits.

It is further known that Curculigo latifolia fruits, which grow in Western Malaysia and the southern part of Thailand and belong to the genus Curculigo of Amaryllidaceae, are good to eat and exhibit an appetizing effect.

Although miraculin has the abovementioned effect, it is not put into practical use as a taste-modifier because of its poor stability.

No effect of Curculigo latifolia fruits except the abovementioned one has been known so far.

The present inventors have found that a sour material or water taken after eating Curculigo latifolia fruits would taste sweet. Thus they have attempted to identify the sweetness-inducer. As a result, they have found that a specific protein contained in Curculigo latifolia fruits is the aimed sweetness-inducer (cf. Japanese Patent Application No. 153143/1988).

However the taste-modification effect of the abovementioned curculin-containing taste-modifier is to such an extent at the highest that a sweetness comparable to that of a 0.3 M aqueous solution of sucrose may be induced from a 0.02 M aqueous solution of citric acid or that a sweetness comparable to that of a 0.1 M aqueous solution of sucrose may be induced from water, when the receptor membrane on the tongue is fully modified with a sufficient amount of said taste-modifier. Thus the industrial application range of said taste-modifier containing curculin is restricted thereby.

It is an object of the present invention to provide a reinforcer for the abovementioned curculin-containing taste-modifier which can reinforce the taste-modification effect of said taste-modifier and thus enlarge the application range of the same.

As a result of extensive studies, the present inventors have succeeded in achieving the above object with the use of a material capable of lowering the concentration of divalent metal ions in the mouth.

Accordingly the present invention, which has been completed based on the above finding, provides a reinforcer for a taste-modifier comprising fresh Curculigo latifolia fruits, dried fruits thereof or a curculin-contianing material obtained therefrom, which comprises a material capable of lowering the concentration of divalent metal ions in the mouth.

The reinforcer for a taste-modifier of the present invention would reinforce the taste-modification effect of the taste-modifier comprising fresh Curculigo latifolia fruits, dried fruits thereof or a curculin-containing material obtained therefrom and thus enlarge the industrial application range of the same. Therefore it is highly effective and important in order to put said taste-modifier into practical use.

### DETAILED DESCRIPTION OF THE INVENTION

A typical example of divalent ions in the mouth is calcium ion contained in the saliva. Further magnesium and ferrous ions may be cited therefor.

Examples of a material capable of lowering the concentration of these metal ions include those containing carbonate ions, those capable of forming carbonate ions in the mouth and cation exchangers.

A carbonate ion would react with a calcium or magnesium ion to thereby form a precipitate comprising a water-insoluble salt, consequently it would lower the concentration of the calcium and magnesium ions in the mouth. Examples of the materials containing carbonate ions or forming the same in the mouth include carbon dioxide gas, water soluble carbonates and aqueous solutions thereof. Examples of the water soluble carbonates include sodium hydrogencarbonate and potassium carbonate.

The abovementioned aqueous solutions of carbon dioxide gas or water soluble carbonates preferably have a carbonate ion concentration of 0.01 to 1.0 M.

Examples of the cat ion exchangers include ion exchange resins such as Amberlite IR-120 and IRC-50 (mfd. by Rohm and Haas), Dowex 50 (mfd. by Dow Chemical Co.) and Bio-Rex 70 (mfd. by BIORAD LABORATORIES INC.), ion exchange celluloses such as CM-cellulose and phosphocellulose and CM-Sephadex.

The reinforcer of the present invention comprising a material capable of lowering the concentration of divalent metal ions in the mouth may be administered into the mouth. When the reinforcer of the present invention comprising the abovementioned cation exchanger is to be introduced into the mouth, it may be preferably come into contact with the upper surface of the tongue.

The reinforcer of the present invention may be taken either before taking the taste-modifier comprising fresh Curculigo latifolia fruits, dried fruits thereof or a curculin-containing material obtained therefrom or thereafter. When said reinforcer is to be administered after taking the taste-modifer, it may be taken either after taking the material to be modified, such as a sour material, or simultaneously therewith.

The fresh Curculigo latifolia fruits or dried fruits thereof constituting the taste-modifier to be used in the present invention may be preferably free from peels and seeds, since no curculin is contained in these parts.

The method for drying Curculigo latifolia fruits is not particularly restricted. Namely, sun-dried Curculigo latifolia fruits, hot air-dried ones and lyophilized ones such as lyophilized pulp may be used in the present invention.

The fresh Curculigo latifolia fruits or dried fruits thereof may be generally ground, milled or pasted prior to the use, though the form of the fresh Curculigo latifolia fruits or dried fruits thereof is not particularly restricted.

Examples of the curculin-containing material obtained from fresh Curculigo latifolia fruits or dried fruits thereof described above include curculin extracted from fresh Curculigo latifolia fruits, dried fruits thereof or the residue obtained by appropriately treating the fresh Curculigo latifolia fruits or dried fruits thereof and removing a curculin-free component therefrom. The concentration of the curculin extracted from fresh Curculigo latifolia fruits or dried fruits thereof is not particularly restricted. Namely, either a highly pure curculin or an extract containing a large amount of materials other than the curculin may be used in the present invention. Further the extract may be mixed with other components.

The extraction of the curculin is not particularly restricted. A preferable example thereof comprises extracting from fresh Curculigo latifolia fruits or dried fruits thereof with an aqueous solution of a salt at a concentration of at least 0.01 M. Examples of the salt include chlorides such as sodium chloride, potassium chloride, calcium chloride, magnesium chloride and ammonium chloride; phosphates such as sodium phosphate, potassium phosphate, magnesium phosphate and ammonium phosphate; carbonates such as sodium carbonate, potassium carbonate, magnesium carbonate and ammonium carbonate; sulfates such as sodium sulfates, magnesium sulfate, calcium sulfate and ammonium sulfate; sulfites such as sodium sulfite, magnesium sulfite, calcium sulfite and ammonium sulfite; nitrates such as sodium nitrate and potassium nitrate; nitrites such as sodium nitrite and potassium nitrite; lactates such as sodium lactate and calcium lactate; alum; burnt alum; sodium acetate; pyrophosphates such as sodium pyrophosphate and potassium pyrophosphate; propionates such as sodium propionate and calcium propionate; sodium benzoate; sodium fumarate; and sodium polyacrylate.

A typical example of the extraction of curculin with the aqueous solution of a salt may be carried in the following manner.

An aqueous solution of a salt such as sodium chloride is added to fresh Curculigo latifolia fruits or dried fruits thereof and the obtained mixture is homogenized followed by filtering and centrifuging. Since curculin is contained in the water-insoluble part of Curculigo latifolia sarcocarp, it is preferable to homogenize the above mixture of the fresh Curculigo latifolia fruits or dried fruits thereof and water followed by thoroughly washing the mixture to thereby remove the water-soluble part and extracting from the residue with the abovementioned salt solution so as to elevate the purity of curculin.

The concentration of the salt of the aqueous solution to be used for the extraction should be 0.01 M or more, since curculin can not be sufficiently extracted with a salt solution of a concentration lower than 0.01 M. On the other hand, a salt solution of an excessively high concentration requires a prolonged period of time for desalting following the extraction. Thus the concentration of the salt solution preferably ranges from 0.1 to 1.0 M, from the viewpoints of the extraction efficiency and the subsequent purification procedure.

The extract thus obtained with the use of the salt solution is then desalted and dried to thereby give a curculin-containing material which is sufficiently available in practice. However the purity of curculin can be further elevated by purifying the above extract by ion exchange chromatography with the use of CM-Sepharose and HPLC with the use of a gel column followed by desalting and drying. Thus pure curculin can be obtained. It is a matter of course that the curculin purity may be further elevated by various purification procedures other than those described above, for example, known protein purification procedures such as salting-out or solvent precipitation.

A typical example of the curculin thus obtained is a protein having a molecular weight of approximately 12,500 dalton, an amino acid residue number of 97 and an iso-electric point of 7.1. This protein is present as a dimer of a molecular weight of approximately 26,000 dalton. The following Table 1 shows the amino acid composition of this protein. Thus it contains relatively large amounts of aspartic acid, leucine and glycine.

**Table 1**

| Amino acid composition | | |
|---|---|---|
| Amino acid | % by mol | No. of residues |
| Aspartic acid (Asp) | 17.3 | 17 |
| Threonine (Thr) | 6.4 | 6 |
| Serine (Ser) | 7.0 | 7 |
| Glutamic acid (Glu) | 7.2 | 7 |
| Proline (Pro) | 1.2 | 1 |
| Glycine (Gly) | 12.5 | 12 |
| Alanine (Ala) | 5.3 | 5 |
| Cystine (Half-cys) | - | - |
| Valine (Val) | 6.8 | 7 |
| Methionine (Met) | 0.4 | 1 |
| Isoleucine (Ile) | 4.2 | 4 |
| Leucine (Leu) | 14.5 | 14 |
| Tyrosine (Tyr) | 5.2 | 5 |
| Phenylalanine (Phe) | 1.3 | 1 |
| Lysine (Lys) | 2.7 | 3 |
| Histidine (His) | 2.4 | 2 |
| Arginine (Arg) | 5.5 | 5 |
| Total | | 97 |

To further illustrate the present invention, the following Examples will be given.

### Example 1

1 g of a Curculigo latifolia fruit was finely ground in a mortar to thereby give a pasty taste-modifier.

The inside of the mouth was thoroughly washed with carbonated water and then 0.5 g of the above taste-modifier was made to uniformly adhere onto the upper surface of the tongue. One minute thereafter, 20 ml of a 0.02 M aqueous solution of citric acid was kept in the mouth. Thus the citric acid solution showed a sweetness comparable to that of a sugar solution.

### Example 2

600 ml of water was added to 30 g of hot air-dried Curculigo latifolia fruits and the mixture was homogenized in a mixer for two minutes and centrifuged at 10,000 rpm for 30 minutes. After removing the supernatant which was colored, 600 ml of water was added to the residue. The obtained mixture was homogenized and centrifuged and the supernatant was removed. This procedure was repeated four times until nonclored supernatant was obtained.

To the residue thus obtained, was added 250 ml of 0.5 M aqueous solutuion of NaCl. The mixture was homogenized in a mixer for two minutes and filtered under reduced pressure. 250 ml of 0.5 M aqueous solution of NaCl was further added to the residue and the obtained mixture was homogenized and filtered under reduced pressure to thereby give a filtrate.

These filtrates were combined and centrifuged at 30,000 rpm for one hour. Thus a crude curculin extract was obtained as the supernatant.

This crude extract was desalted and dried to thereby give a curculin-containing material, namely crude curculin.

100 mg of the crude curculin thus obtained and 1 mg of sodium chloride were dissolved in 20 ml of water to thereby give a 0.5 % aqueous solution of the crude curculin.

1 ml of this curculin solution was kept in the mouth for a minute and then vomited. Subsequently 5 mg of L-ascorbic acid or a mixture of L-ascorbic acid and sodium hydrogencarbonate (1 : 1) was taken. Table 2 shows the sweetness induced in each case.

**Table 2**

| Sample | Sweetness |
|---|---|
| L-ascorbic acid | Comparable to that of 0.2 M aqueous solution of sucrose |
| L-ascorbic acid/sodium hydrogencarbonate (1:1) | Comparable to that of 0.3 M aqueous solution of sucrose |

### Example 3

500 ml of the crude curculin extract obtained in Example 2 was concentrated to 30 ml through ultrafiltration. Then 70 ml of a 0.01 M phosphate buffer (pH 6.8) was added thereto to thereby give the total volume of 100 ml. The sample solution thus obtained was passed through a column charged with CM-Sepharose CL-4B which had been equilibrated with a 0.01 M phosphate buffer (pH 6.8) (bed volume: 130 ml, bed height: 17 cm). After washing with a 0.01 M phosphate buffer (pH 6.8), the column was subjected to gradient elution with 0 to 1.0 M NaCl/0.01 M phosphate buffer (pH 6.8) and active fractions were combined. These active fractions were concentrated by ultrafiltration, subjected to HPLC with the use of a gel column charged with TSK Gel G3000SW (mfd. by Toyo Soda Mfg Co., Ltd.) and eluted with a 0.01 M phosphate buffer (pH 6.8).

Thus curculin was eluted as a sharp peak showing an intense activity.

This active fraction was desalted and dried to thereby give purified curculin.

10 mg of the purified curculin thus obtained and 1 mg of sodium chloride were dissolved in 20 ml of water to thereby give a 0.01 % aqueous solution of curculin.

A cation exchange resin Amberlite IR-120 (mfd. by Rohm and Haas) was kept in the mouth for a minute to thereby uniformly contact it with the whole upper surface of the tongue. Then it was vomitted. Subsequently 1 ml of the 0.01 % aqueous solution of curculin obtained above was kept in the mouth for a minute and then vomitted. Then a 0.02 M aqueous solution of citric acid was taken. Table 3 shows the sweetness thus induced and that induced by the same procedure as the one described above except no cation exchange resin was used.

**Table 3**

| Cation exchanger | Sweetness |
|---|---|
| No | Comparable to that of 0.3 M aqueous solution of sucrose |
| Yes | Comparable to that of 0.4 M aqueous solution of sucrose |

## Claims

1. A taste-modifier composition comprising fresh Curculigo latifolia fruits, dried fruits thereof or a curculin-containing material obtained therefrom and a reinforcer for said taste-modifier which comprises a material capable of lowering the concentration of divalent metal ions in the mouth.

2. The taste-modifier composition according to claim 1, wherein the Curculigo latifolia fruits, dried fruits thereof or curculin-containing material obtained therefrom are physically separated from the reinforcer.

3. The taste-modifier composition according to claims 1 or 2, wherein the material capable of lowering the concentration of divalent metal ions in the mouth is one or more materials selected from the group consisting of those containing carbonate ions, those capable of forming carbonate ions in the mouth and cation exchangers.

4. The use of a material capable of lowering the concentration of divalent metal ions in the mouth for reinforcing the taste-modification effect of a taste-modifier comprising fresh Curculigo latifolia fruits, dried fruits thereof or a curculin-containing material obtained therefrom.

5. The use according to claim 4, wherein the material capable of lowering the concentration of divalent metal ions in the mouth is one or more materials selected from the group consisting of those containing carbonate ions, those capable of forming carbonate ions in the mouth and cation exchangers.

## Patentansprüche

1. Geschmacksmodifikator-Zusammensetzung, umfassend frische Curculigo latifolia Früchte, getrocknete Früchte davon oder ein daraus erhaltenes Curculin-haltiges Material und einen Verstärker für den Geschmacksmodifikator, der ein Material umfaßt, das fähig ist, die Konzentration zweiwertiger Metalle im Mund zu verringern.

2. Geschmacksmodifikator-Zusammensetzung nach Anspruch 1, worin die Curculigo latifolia Früchte, die getrockneten Früchte davon oder das daraus erhaltene Curculin-haltige Material physisch von dem Verstärker getrennt sind.

3. Geschmacksmodifikator-Zusammensetzung nach Anspruch 1 oder 2, worin das Material, das fähig ist, die Konzentration zweiwertiger Metallionen im Mund zu verringern, eines oder mehrere Materialien, ausgewählt aus der Gruppe, bestehend aus solchen, die Carbonationen enthalten, solchen, die fähig sind, Carbonationen im Mund zu bilden, und Kationenaustauschern, ist (sind).

4. Verwendung eines Materials, das fähig ist, die Konzentration zweiwertiger Metallionen im Mund zu verringern, zur Verstärkung des Geschmacks-modifizierenden Effekts eines Geschmacksmodifikators, der frische Curculigo latifolia Früchte, getrocknete Früchte davon oder ein daraus erhaltenes Curculin-haltiges Material umfaßt.

5. Verwendung nach Anspruch 4, worin das Material, das fähig ist, die Konzentration zweiwertiger Metallionen im Mund zu verringern, eines oder mehrere Materialien, ausgewählt aus der Gruppe, bestehend aus solchen, die Carbonationen enthalten, solchen, die fähig sind, im Mund Carbonationen zu bilden, und Kationenaustauschern, ist (sind).

## Revendications

1. Composition de modificateur de goût comprenant des fruits de *Curculigo latifolfa* frais ou séchés, ou un matériau contenant de la curculine obtenu à partir de ces fruits et un agent renforçant ledit modificateur de goût qui comprend un matériau capable d'abaisser la concentration des ions métalliques divalents dans la bouche.

2. Composition de modificateur de goût selon la revendication 1, dans laquelle les fruits de *Curculigo latifolia* frais ou séchés, ou le matériau contenant de la curculine obtenu à partir de ces fruits sont physiquement séparés de l'agent renforçant.

3. Composition de modificateur de goût selon la revendication 1 ou 2, dans laquelle le matériau capable d'abaisser la concentration des ions métalliques divalents dans la bouche est un ou plusieurs matériaux choisis dans le groupe constitué des matériaux contenant des ions carbonate, de ceux qui sont capables de former des ions carbonate dans la bouche et des échangeurs de cations.

4. Utilisation d'un matériau capable d'abaisser la concentration des ions métalliques divalents dans la bouche pour renforcer l'effet de modification du goût d'un modificateur de goût comprenant des fruits de *Curculigo latifolia* frais ou séchés, ou un matériau contenant de la curculine obtenu à partir de ces fruits.

5. Utilisation selon la revendication 4, dans laquelle le matériau capable d'abaisser la concentration des ions métalliques divalents dans la bouche est un ou plusieurs matériaux choisis dans le groupe constitué des matériaux contenant des dons carbonate, de ceux qui sont capables de former des ions carbonate dans la bouche et des échangeurs de cations.
